# EUROPEAN PATENT APPLICATION

(11) **EP 1 645 353 A2**
(43) Date of publication of application: **12.04.2006**
(21) Application number: 05021639.9
(22) Date of filing: 04.10.2005
(51) Int. Cl.: B23K 9/28

(54) **Arc welding and arc welding robot system**

(30) Priority: 05.10.2004 JP 2004293004
(71) Applicant: FANUC LTD, Minamitsuru-gun, Yamanashi 401-0597 (JP)
(72) Inventor: Nakabayashi, Kouji, Hirakata-shi Osaka 573-0061 (JP); Inoue, Toshihiko, Fujiyoshida-shi Yamanashi 403-0017 (JP); Nakayama, Kazutaka, Minamitsuru-gun Yamanashi 403-0023 (JP); Iwayama, Takatoshi Room 12-203, Minamitsuru-gun Yamanashi 401-0511 (JP)
(74) Representative: Schmidt, Steffen J.

(57) **Abstract**

An arc welding device, having a simple structure, in which a welding torch does not interfere with external equipment. A Y-shaped torch cable includes first and second wire liners and a junction block having a Y-shaped liner section having two inlets connected to the wire liners and one outlet. A welding wire selectively fed from one of two wire feeders extends in the first or second wire liner and reaches the outlet of the liner section. Therefore, as one of plural kinds of welding wires may be selected and fed to a single-electrode welding torch, the plurality of welding wires being used for welding, nevertheless the welding torch does not interfere with external equipment.

## Description

### BACKGROUND ART

### 1. TECHNICAL FIELD

The preset invention relates to an arc welding device and, in particular, to an arc welding robot and a robot system including the arc welding robot.

### 2. DESCRIPTION OF THE RELATED ART

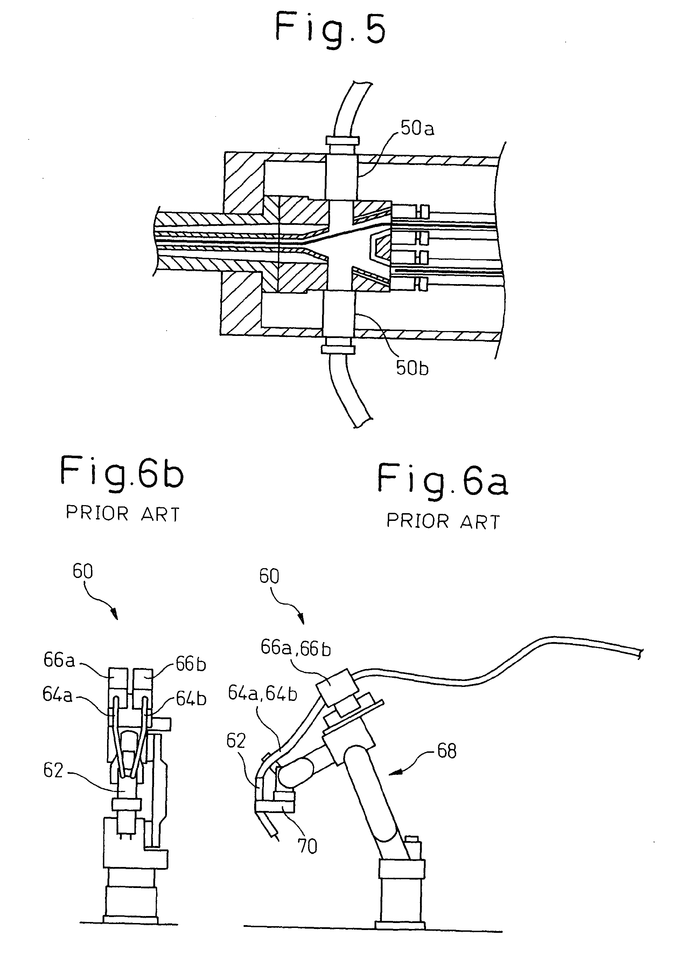

As shown in Figs. 6a and 6b, a conventional arc welding device 60 includes a multi-electrode type welding torch 62, first and second torch cables 64a and 64b, and first and second wire feeders 66a and 66b. These components are mounted on a robot mechanism 68. The welding torch 62 is fixed to a wrist element 70 of the robot mechanism 68. The first and second wire feeders 66a and 66b are connected to the welding torch 62 via the first and second torch cables so as to feed several types of wires (two types in this case) to the torch. One of the first and second wire feeders 66a and 66b feeds the welding wire to the torch 62 based on a command from a control part which is not shown.

Another conventional arc welding device includes a plurality of units each having a welding torch, a torch cable and a wire feeder and only the welding torch of each unit may be exchanged by a not shown tool exchanger. In such a welding device, for example, while the torch cable is connected to the wire feeder in each unit, the welding torch of a unit not in use is held by a holding means and the other welding torch of a unit in use is fixed to the wrist of the robot, whereby the two welding torches may be selectively used as needed.

In the conventional arc welding device, the configuration of peripheral equipment is often complicated, as the multi-electrode torch is fixed to the end of the robot and a plurality of torch cables are arranged. Further, as the multi-electrode torch is generally large, the torch may interfere with peripheral equipment or other structures.

### SUMMARY OF THE INVENTION

An object of the present invention is to provide an arc welding device having a simple structure so as to resolve the above problems.

In order to resolve the above problems, there is provided an arc welding device comprising: one single-electrode welding torch; a plurality of wire feeders for feeding a welding wire to the welding torch; and a wire feeding path having a plurality of wire inlets for receiving a plurality of welding wires fed from the wire feeders and one wire outlet for feeding one of the welding wires to the welding torch; wherein one welding wire selectively fed from one of the wire feeders is fed to the welding torch for welding, through one of the wire inlets connected to the wire feeder and the wire outlets.

The wire feeding path may be arranged in the welding torch. In this case, the wire inlets are respectively connected to the wire feeders by a plurality of torch cables.

Alternatively, the wire feeding path may be arranged in one torch cable which connects each wire feeder to the welding torch.

According to another aspect of the invention, there is provided an arc welding robot system comprising: the above welding device of the invention; a robot mechanism for holding the welding torch; at least one welding power source for supplying welding current to the welding device; and a control part for controlling the at least one welding power source.

The wire feeders may be mounted on the robot mechanism. Alternatively, at least one of the wire feeders may be located at a place other than on the robot mechanism.

### BRIEF DESCRIPTION OF THE DRAWINGS

The above and other objects, features and advantages of the present invention will be made more apparent from the following description of the preferred embodiments thereof, with reference to the accompanying drawings, wherein:
Figs. 1a and 1b are front and side views, respectively, of a total configuration of an arc welding robot system according to a first embodiment of the invention;
Fig. 2 is a schematic view showing the configuration of a welding torch and a torch cable used for the system of Figs. 1a and 1b;
Figs. 3a and 3b are front and side views, respectively, of a total configuration of an arc welding robot system according to a second embodiment of the invention;
Fig. 4 is a sectional view showing the configuration of a branch block of a wire liner used for the system of Figs. 3a and 3b;
Fig. 5 is a view showing the modification of the branch block of Fig. 4 such that the branch block may be blown with air; and
Figs. 6a and 6b are front and side views of a total configuration of an arc welding robot system of the prior art.

### DETAILED DESCRIPTION

Embodiments of the invention will be described with reference to the drawings.

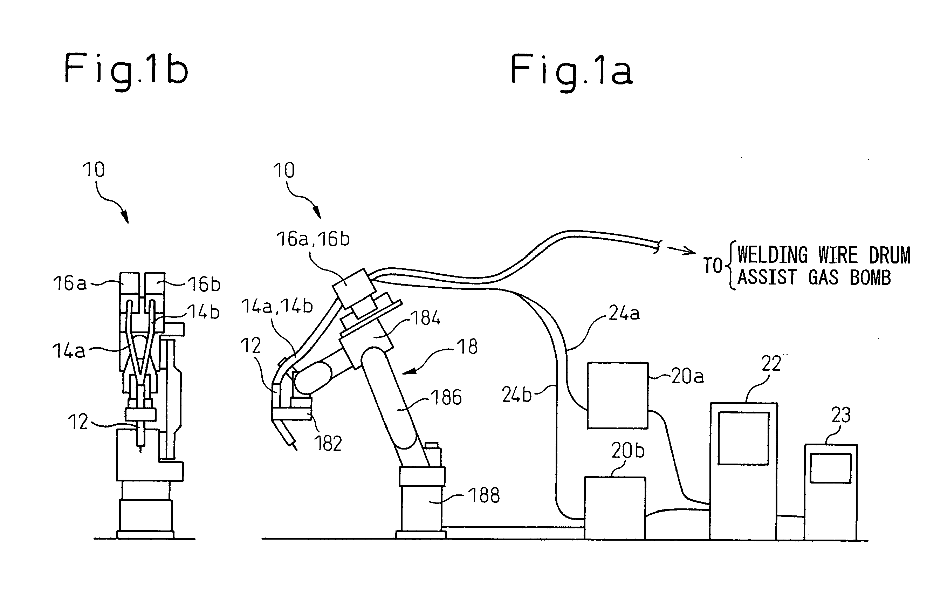

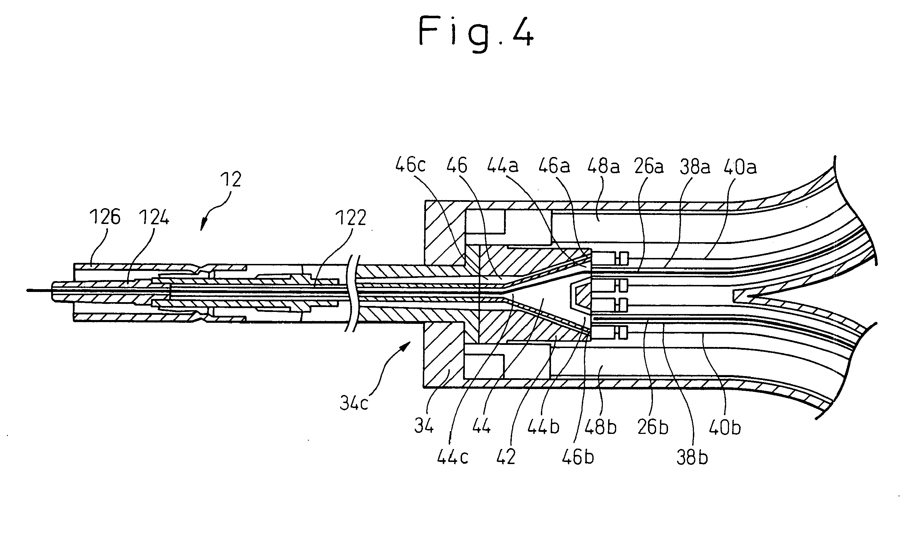

Figs. 1a and 1b show a total configuration of an arc welding device 10 according to the invention. The arc welding device 10 includes a welding torch 12, first and second torch cables 14a and 14b connected to the welding torch 12, and first and second wire feeders 16a and 16b for feeding a welding wire to the welding torch 12 through the first and the torch cables 14a and 14b, respectively. The torch 12 and the wire feeders 16a and 16b are mounted on a robot mechanism 18. The robot mechanism 18 is preferably a type of unit including vertical multi-joint and has a wrist element 182 for holding the torch 12, a forearm 184 having the wrist element 182 at one end thereof for supporting the wire feeders 16a and 16b, an upper arm 186 connected to the other end of the forearm 184 and a turning body 188 for turning the upper arm 186. First and second welding power sources 20a and 20b are connected to the first and second wire feeders 16a and 16b, respectively. The power sources 20a and 20b are activated by a control part 22 configured to send a command to the power sources. In other words, the control part 22 controls the power sources 20a and 20b such that a welding current and a welding voltage, applied to power cables (described below with reference to Fig. 4) via first and second power feeding cable 24a and 24b, are suitably controlled. The feeding cables 24a and 24b connect the wire feeders 16a and 16b to the power sources 20a and 20b, respectively. The arc welding device 10, the robot mechanism 18, the first and second power sources 20a and 20b and the control part 22 constitute an arc welding robot system. In this embodiment, both of the two wire feeders are mounted on the rear of the forearm 184 of the robot mechanism 18. However, the wire feeders may be positioned on the other part of the robot mechanism, such as the front of the forearm 184, the upper arm 186 or the turning body 188. Alternatively, the wire feeders may be positioned around the robot mechanism, otherwise, one wire feeder may be positioned on the robot mechanism and the other wire feeders may be positioned around the robot mechanism.

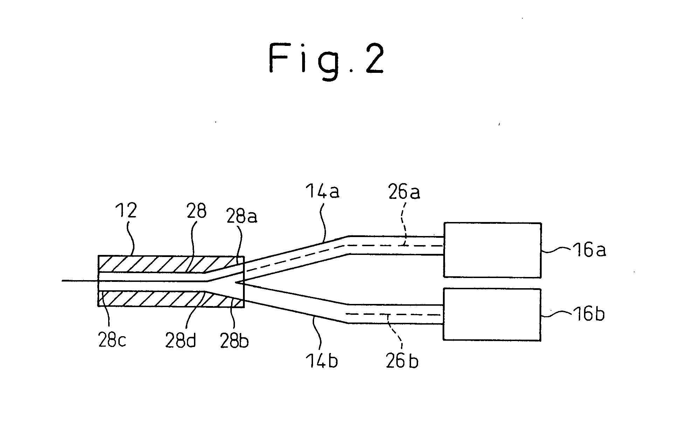

The welding torch 12 serves as a single-electrode welding torch. As schematically shown in Fig. 2, the welding torch 12 has a wire feeding path or a wire liner 28 generally having a Y-shape, such that a plurality of kinds of welding wires (two wires 26a and 26b are shown) may be fed into the torch 12. The wire liner 28 includes first and second wire inlets 28a and 28b and one wire outlet or a tip 28c. The first and second wire feeders 16a and 16b are connected to the first and second inlets 28a and 28b via the first and second torch cables 14a and 14b, respectively. Therefore, the welding wire 26a or 26b selected and fed from one of the wire feeders may pass through the torch cables 14a or 14b and the wire inlet 28a or 28b and, then, leave from the wire outlet 28c. The welding wire 26a or 26b may be suitably selected, based on a type of a workpiece to be welded, and used for welding.

Although two welding power sources are used in the embodiment of Figs. 1a and 1b, it is also possible to use only one power source, one power feeding cable, one power cable and a plurality of wire feeders for feeding a plurality of welding wires. In this case, the command from the power source may be sent to the wire feeders by arranging an output signal switcher on a control cable for wire feeding (not shown). The control cable has a plurality of branch points and each branch point is connected to each wire feeder. The output signal switcher selects the welding wire to be fed based on the command from the power source and controls the plurality of wire feeders.

Next, the actual welding is described. In the above robot system, when a workpiece is welded, the workpiece is attached to a jig (not shown) arranged in the front of the robot mechanism 18. In accordance with a command from a system control panel 23 commanding the control part 22, the robot mechanism 18 checks the kind of the workpiece and carries out welding with a welding condition suitable for the workpiece. The welding current and voltage, welding speed, wire feeding speed, a kind of assist gas and the material of the welding wire, etc., are predetermined in relation to the kind of workpiece. At this point, a method of the invention for changing the material of the wire corresponding to the kind of workpiece is described below. It is assumed that welding wires 26a and 26b are assigned to workpieces A and B (not shown), respectively. When the robot mechanism 18 is commanded to weld the workpiece A by the system control panel 23, the robot mechanism 18 sends a command to the first power source 20a for feeding the welding wire 26a, as the wire 26a must be used for welding the workpiece A. Then, the first power source 20a sends a feeding command to the first wire feeder 16a for feeding the wire 26a. Although the feeding command may be sent to the first wire feeder 16a via the control cable for wire feeding, the command may also be sent via the output signal switcher. When the welding of the workpiece A is finished, the kind of next workpiece to be welded is outputted from the system control panel 23.

If the next workpiece is also the workpiece A, the next welding may be carried out in the same way as the above. However, when the next workpiece is the workpiece B, the kind of the wire fed to the welding torch 12 is changed before welding, as described below. First, the first power source 20a commands the first wire feeder 16a to retract the wire 26a from the torch 12. At this point, the first wire feeder 16a retracts the wire 26a such that the front end of the wire 26a is positioned before a junction 28d of the wire liner 28. Then, the second power source 20b commands the second wire feeder 16b to feed the wire 26b to the welding torch 12, whereby the second wire feeder 16b feeds the wire 26b such that the front end of the wire 26b extends from the torch 12 or the tip 28c of the liner 28 by a required length. As not shown, each wire feeder may include a feeding roller for feeding the wire, a motor for controlling the rotation of the roller and a feedback device for controlling the motor, whereby the wire may be precisely fed. In addition, when it is difficult to control the length of the wire extending from the tip 28c in the robot system, a wire cutter (not shown) may be arranged near the robot mechanism 18. The wire cutter may be configured to cut the wire when the wire is moved to a predetermined position of the wire cutter by the robot mechanism 18.

When a further next workpiece is the workpiece A, the wire 26b may be retracted such that the front end of the wire is positioned before the junction 28d and the wire 26a may be fed to the torch 12 for welding.

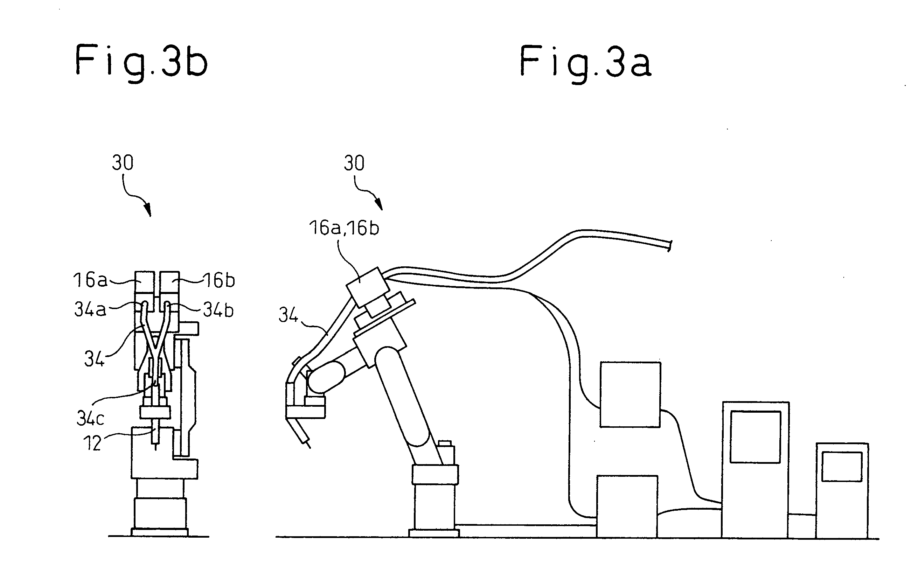

An arc welding device 30 according to a second embodiment of the invention, as shown in Figs. 3a and 3b, is different from the first embodiment in that a junction of a wire liner is positioned in a torch cable 34 having Y-shape, not in the welding torch 12. As the rest of the configuration of the second embodiment may be the same as that of the first embodiment, a detailed description is omitted.

The configuration of the wire liner of the second embodiment is described with reference to Fig. 4. The wire liner is divided in the Y-shaped torch cable 34 and not in the welding torch 12. In particular, the welding wires 26a and 26b pass through first and second wire liners 38a and 38b extending in the torch cable 34, respectively. As shown in Figs. 3a and 3b, the Y-shaped torch cable 34 includes first and second wire inlets 34a and 34b connected to the wire feeders 16a and 16b and one wire outlet 34c connected to the welding torch 12. Therefore, the wires 26a and 26b selectively fed from the wire feeders 16a and 16b may extend through the wire liners 38a and 38b, respectively, and may be introduced into the torch 12 via the outlet 34c. The torch cable 34 may also serve as a supply pipe for supplying an assist gas used for welding. The assist gas flows in first and second assist gas tubes 40a and 40b. As shown, the first and second assist gas tubes 40a and 40b are preferably arranged concentrically with and outside of the wire liners 38a and 38b, respectively.

The first and second wire liners and the first and second assist gas tube are connected to a junction part or a junction block 42 arranged in the torch cable 34. The junction block 42 includes a wire liner section 44 having first and second openings 44a and 44b configured to receive the wires extending through the wire liners 38a and 38b, respectively. The junction block 42 further includes a flow path 46 having first and second openings 46a and 46b configured such that the assist gas passing through the gas tubes 40a and 40b may flow into the openings 46a and 46b, respectively. As the wire liner section 44 has a Y-shape, the wire extending through the liner section 44 via the opening 44a or 44b may project from a third opening 44c of the liner section 44. Similarly, as the flow path 46 has a Y-shape or a junction, the assist gas flowing into the opening 46a or 46b may flow out from a third opening 46c of the flow path 46. The wire liners 38a and 38b and the block 42 are preferably detachable from the torch cable 34 so as to allow them to be exchanged when, for example, they are worn by contacting the wire.

As shown in Fig. 4, the third opening 44c of the wire liner section 44 is communicated with a third wire liner 122 of the welding torch 12 and the third wire liner 122 is connected to a tip 124 at the front end of the torch 12. Therefore, the wire 26a or 26b fed from the wire feeder 16a or 16b and extending through the torch cable 34 may extend through the third wire liner 122 and protrude from the tip 124 so as to be used for welding. On the other hand, the assist gas supplied from a gas source (not shown), passing through the assist gas tube 40a or 40b, the flow path 46 of the block 42 and the outside of the third wire liner 122, may flow out from a nozzle 126 of the torch 12 so as to be used for welding. First and second power cable 48a and 48b, extending through the torch cable 34 along the first and second assist gas tubes 40a and 40b, respectively, are connected to the block 42 also serving as a power feeding block for feeding power to the torch 12. Needless to say, the power cables 48a and 48b may be integrated into one cable.

When it is preferable to change the kind of assist gas in changing the kind of the wire, the change of the assist gas may be carried out by the similar way used for the wire liners 38a and 38b. In other words, a solenoid valve (not shown) is mounted on each wire feeder and is controlled for changing the assist gas. The assist gas supplied to the solenoid valve via a gas pipe or the like flows in the assist gas tube 40a or 40b and the block 42 and, then, reaches the front end of the welding torch 12. If required, pre-flow may be carried out until old assist gas in the flow path is fully replaced with new assist gas. Although the solenoid valve may prevent the assist gas from reversely flowing, to make sure of preventing the reverse flow, a check valve (not shown) may be arranged on the side of the block 42 near the wire feeder. Also, the check valve allows the changing time of the assist gas to be reduced.

In the junction block 42, abraded powder or particles of the wire may deposit. In this case, the powder may be blown to the outside with the assist gas by means of another configuration in which the assist gas may flow into the wire liner section 44 in the block 42. However, in case that the abraded powder is required to be more positively removed or that the assist gas does not flow in the wire liner section as shown in Fig. 4, air blow pipes 50a and 50b may be used, as shown in Fig. 5. The inflow and outflow pipes 50a and 50b are connected to the junction block 42 and communicate with the liner section 44. By connecting an air blow device (not shown) to the air blow pipes, the junction block may be kept clean.

In the arc welding robot system of the invention, the motion of the torch cable during the welding operation may be stable by using an appropriate constitution, for example, described in Japanese Unexamined Patent Publication (Kokai) No. 2004-223576 or Japanese Patent Application No. 2004-71304 (assigned to the same applicant). In this constitution, a welding torch is rotatable about an axis apart from an axis of revolution of an output flange of a wrist element. Further, the constitution includes a slide mechanism arranged on a forearm of a robot and capable of movably supporting the torch cable, and a tension force generator for moving the slide mechanism away from a work tool. As the Y-shaped or two-way torch cable described above is relatively bulky, the torch cable may interfere with external equipments. However, due to the above constitution, even when the orientation of the welding torch is widely changed, the motion of the torch cable may be small. Therefore, the welding may be carried out without interference between the torch cable and the external equipments. Although the illustrated embodiments of the invention include the two wire feeders and the Y-shaped or two-way wire liner, the embodiments may include three or more wire feeders and a wire liner having three or more ways.

According to the arc welding device of the invention, as plurality kinds of welding wires may be fed to a single-electrode welding torch, one of the welding wires may be selected and used for welding but, nevertheless, the welding torch does not interfere with external equipment.

While the invention has been described with reference to specific embodiments chosen for the purpose of illustration, it should be apparent that numerous modifications could be made thereto, by one skilled in the art, without departing from the basic concept and scope of the invention.

## Claims

1. An arc welding device comprising:
one single-electrode welding torch (12); and
a plurality of wire feeders (16a, 16b) for feeding a welding wire to the welding torch (12), **characterized in that** the device comprises:
a wire feeding path (28) having a plurality of wire inlets (28a, 28b) for receiving a plurality of welding wires (26a, 26b) fed from the wire feeders (16a, 16b) and one wire outlet (28c) for feeding one of the welding wires (26a, 26b) to the welding torch (12), whereby one welding wire (26a; 26b) selectively fed from one of the wire feeders (16a; 16b) is fed to the welding torch (12) for welding, through one of the wire inlets (28a; 28b) connected to the wire feeders (16a, 16b) and the wire outlets (28c).

2. The arc welding device as set forth in claim 1, wherein the wire feeding path (28) is arranged in the welding torch (12) and the wire inlets (28a, 28b) are respectively connected to the wire feeders (16a, 16b) by a plurality of torch cables (14a, 14b).

3. The arc welding device as set forth in claim 1, wherein the wire feeding path (28) is arranged in one torch cable (34) which connects each wire feeder (16a, 16b) to the welding torch (12).

4. An arc welding robot system comprising:
an arc welding device (10) as set forth in any preceding claims;
a robot mechanism (18) for holding the welding torch (12);
at least one welding power source (20a, 20b) for supplying welding current to the welding device (10); and
a control part (22) for controlling the at least one welding power source (20a, 20b).

5. The arc welding robot system as set forth in claim 4, wherein the wire feeders (16a, 16b) are mounted on the robot mechanism (18).

6. The arc welding robot system as set forth in claim 4, wherein at least one of the wire feeders (16a, 16b) is located at a place other than the robot mechanism (18).
